# EUROPEAN PATENT APPLICATION

(11) **EP 2 216 725 A1**
(43) Date of publication of application: **11.08.2010**
(21) Application number: 09150235.1
(22) Date of filing: 08.01.2009
(51) Int. Cl.: G06F 17/30

(54) **Interactive information system**

(71) Applicant: CarryQuote AG, 6343 Rotkreuz (CH)
(72) Inventor: Stennicke, Michael Baron, 6343, Rotkreuz (CH); Selin, Sergei, Plantation, FL 33317 (US)
(74) Representative: Kopf, Korbinian Paul

(57) **Abstract**

According to an exemplary embodiment of the present invention, an interactive information system for providing user data is stated, in which a control unit preprocesses data selected from raw data received from at least one individual data source. The selected pre-processed data is then transmitted to a user interface device where it is further processed and interactively displayed. The raw data received from the at least one individual data source relates to static snapshot data. Thus, real-time snapshots may be delivered to a user on demand or based on pre-set threshold resulting in effective user information with minimum data transfer.

## Description

### Field of the invention

The present invention relates to the field of data communication and information. In particular, the present invention relates to an interactive information system for providing user data, a user interface device, a control unit, a method of interactively providing user data, a program element and a computer-readable medium.

### Technological background of the invention

Information systems often provide real-time streaming data to a user who is using a corresponding data service provider via the internet.

Such an information system may require the continuous transmission of a relatively big amount of data. The data to be transmitted may comprise graphical information which for example relates to market changes and fluctuations of a financial market. Such information is critical to many businesses, especially in today's global market that operates all day, every day. Business people, including financial analysts, traders, investors, and corporate executives increasingly rely on ubiquitous connectivity to remain informed of market events that are important, or could impact, their business.

The introduction of mobile devices capable of wireless communication with data servers, such as for example web servers, has increased the ability of a user to achieve near-constant awareness of market data. However, such ability has increased the user's reliance on network connectivity and bandwidth. More useful data, and the display of data to which users are accustomed, such as market graphs and charts, require substantial network bandwidth to transmit the graphical images of the data. Additionally, as the amount of data being transmitted increases, the reliability of the devices network connection becomes increasing important to ensure timely delivery of complete messages as well as preventing timeouts of transmission of large quantities of data, thus resulting in incomplete and useless data.

For example, the user can access market data using a web browser application running on the mobile device. However, web browsing can require substantial bandwidths to transfer not only the graphics associated with the market data, but also all other graphics on a web page, such as advertisements and navigation images. Furthermore, use of a web browser requires a user's active participation in the process, including seeking out market data, reloading/refreshing data, and other actions.

The above-mentioned information systems thus require the transfer of large amounts of data and are therefore expensive. Furthermore, they may not work sufficiently reliable if only limited network coverage is available at the mobile user device. Still further, an internet connection is necessary.

In contrast to real-time streaming data providers there are other information systems which provide timely delayed market data to the users. However, for many users this information is too limited when, for example, the market is volatile on a short time scale.

### Summary of the invention

It may be desirable to provide for an improved information service for a user having a mobile device.

The present invention provides an interactive information system, a user interface, a control unit, a method of interactively providing user data, a computer-readable medium and a program element according to the features of the independent claims. Further embodiments of the present invention are set forth in the dependent claims.

It should be noted that features which are in the following discussed with reference to, for example, the interactive information system may also be implemented into the method, the program element or the computer-readable medium, and vice versa.

According to an exemplary embodiment of the present invention, an interactive information system for providing relevant user information from raw data acquired from a plurality of individual data sources to a user is provided, the interactive information system comprising a first interface, a control unit and a user interface device. The first interface is adapted for receiving the raw data from at least one individual data source and the user interface device is adapted for selecting, by a user, a particular data set from the raw data. The control unit is adapted for pre-processing the selected particular data set, resulting in user data, wherein the user interface device is further adapted for interactively displaying the user data to the user. The raw data is static real-time snapshot data.

As opposed to streaming real-time data, the snapshot data is only sampled on request or via triggering of a user or a system defined event. This significantly lowers requirements to available bandwidth and introduces new business paradigm for the data providers, i.e. one where data providers charge per usage rather than a fixed periodic fee.

Static Snapshot Data is a way to express the condition(s) of a financial instrument by delivering a numerical value describing a certain condition of an instrument associated with a time stamp denoting the validity of the numerical value. Examples of snapshots are exchange quotes for the instrument at given point in time or derived analytical value(s) for an instrument at given point in time.

In other words, the control unit, which may have the form of a central server, collects multiple raw data sets from multiple individual data sources. These raw data sets are pre- processed by the control unit and, before or after pre-processing, stored in a storage section of the control unit. A selected sub-data set of the raw data (which is pre-processed either before or after selection by the user) is transmitted to the user interface device for display.

The user interface device may be adapted for further processing of the pre-processed data.

One important feature is that the end user does not have to sign up with the individual data source providers (such as, for example, stock exchanges). No expensive fees for real-time streaming data have to be paid but only real-time snapshot fees, i.e. pay per snapshot.

Pre-processing of the snapshot data received from the individual data sources in the control unit allows for strategic fundamental and technical ratings and other forms of information management by the control unit such that a huge amount of different raw data can be brought into a form having high information density tailored to specific user needs.

According to another exemplary embodiment of the present invention, the user interface device is further adapted for selecting, by a user, a data point from the user data and for determining a data point value of the data point.

In other words, the user can select a particular data point from the pre-processed particular data set and can trigger a further analysis of this particular data point.

The data point selection may for example be performed by using a computer mouse or a touch screen.

According to another exemplary embodiment of the present invention, the data point value is a real-time value. For example, if the user selects a certain data point from the user data the user interface device transmits a corresponding message to the control unit which requests further data from the corresponding individual data source relating to the data point. This further information is then transmitted from the individual data source to the control unit and is then, if necessary after a further pre-processing step, transmitted from the control unit to the user interface device where it is presented to the user, if necessary after a further processing by the user interface device.

According to another exemplary embodiment of the present invention, the data point relates to a data point value and a time stamp.

According to another exemplary embodiment of the present invention, the data point relates to four data point values (such as Open/High/Low/Close chart, OHLC) and a time stamp.

An OHLC chart consists of a sequence of chronologically arranged period readings of the OHLC points over a particular period and with a certain periodicity thus providing user with a visual impression of historical data behaviour.

In other words, an OHLC chart may be an X-Y chart where X-axis denotes a time line and Y-axis shows the instrument's quotes at four specific time points for a given time frame: "Open" shows the quote at the beginning of time frame, "High" shows the maximum quote value during the time frame, "Low" shows the minimum quote value during the time frame and "Close" shows the quote at the end of time frame.

According to another exemplary embodiment of the present invention, the control unit is adapted for encoding the data point before transmitting the data point to the user interface device. Furthermore, the control unit may be adapted for encoding not only the data point but each and every user data transmitted to the user interface device.

According to another exemplary embodiment of the present invention, the user interface device is adapted for rendering a display of the user data based on an array of received data points.

According to another exemplary embodiment of the present invention, the control unit is adapted for transmitting the user data as an array of data points to the user interface device via a data package of a fixed maximum size.

For example, the data package of the fixed maximum size is an SMS (Short Message Service) data package which is limited to 1.120 bits of data.

The control unit is able to generate the data package which comprises part of the information in which the user is interested. This fixed size data package is then transmitted to the user interface device and there decoded and further processed. In order to be able to interpret and display the information contained in the data package in the right way, the receiving station (user interface device) needs further information stored in the receiving station. Thus, the processing information does not need to be transmitted from the control unit to the user interface device.

This processing information directly relates to the information stored in the data package and enables the user interface device to, for example, display the information on a screen or some display.

In other words, not the whole information needed for displaying the data is transmitted, but only part of it. The other part of the information which is needed for displaying the data is already stored at the user interface device and thus does not need to be transmitted to the interface device.

According to another exemplary embodiment of the present invention, the user data is static real-time data. When the user requests, i.e. selects, a particular data set from the raw data, a corresponding snapshot data may be requested from the corresponding external data server which is then, after pre-processing by the control unit, transmitted to the user interface device, thus providing static real-time snapshot data to the user, i.e. a real-time sampling of latest data point.

According to another exemplary embodiment of the present invention, the control unit is adapted for pre-processing the received raw data upon a user request from the user interface device.

Thus, pre-processing may only take place after a user has requested (i.e. selected) particular data.

According to another exemplary embodiment of the present invention, the user interface device is part of a mobile device, such as for example a smartphone.

According to another exemplary embodiment of the present invention, at least one individual data source is one of a global exchange provider, a foreign exchange broker, or a bank.

According to another exemplary embodiment of the present invention, the receipt of the raw data from the at least one individual data source is triggered by the control unit.

In other words, raw data is only transmitted from an individual data source to the control unit upon request either by the user or by the control unit itself. Thus, the amount of data transmitted can effectively be reduced.

According to another exemplary embodiment of the present invention, the control unit is further adapted for automatically alerting the user if the user data or the raw data triggers a pre-selected threshold criteria. Such a threshold criteria may be predetermined by the user, either via the user interface device or some other web interface or directly by the control unit.

According to another exemplary embodiment of the present invention, the user data displayed on the user interface device comprises data comprising information about an activity of a market, for example a stock market.

According to another exemplary embodiment of the present invention, a user interface device of an above and in the following described interactive information system is provided.

According to another exemplary embodiment of the present invention, a control unit of an above and in the following described interactive information system is provided.

According to another exemplary embodiment of the present invention, a method of interactively providing user data from raw data acquired from a plurality of individual data sources to a user is provided, in which raw data from at least one individual data source is received in a control unit. Furthermore, a particular data set from the raw data is selected by a user by means of a user interface device. Furthermore, a pre-processing of the selected particular data set is performed, resulting in user data, wherein the user data is displayed to the user by means of the user interface device in an interactive manner. The raw data is static snapshot data.

According to another exemplary embodiment of the present invention, a program element of interactively providing user data from raw data acquired from a plurality of individual data sources to a user is provided, which, when being executed by a processor, is adapted to carry out the above and in the following described method steps.

According to another exemplary embodiment of the present invention, a computer-readable medium is provided, in which a computer program or program element of interactively providing user data from raw data acquired from a plurality of individual data sources to a user is stored which, when being executed by a processor, is adapted to carry out the above and in the following described method steps.

The program element may be stored on the computer-readable medium and may be loaded into working memories of a data processor. The data processor may thus be equipped to carry out exemplary embodiments of the methods of the present invention. The program element may be written in any suitable programming language, such as, for example, C++ and may be stored on the computer-readable medium, such as a CD-ROM. Also, the program element may be available from a network, such as the WorldWideWeb, from which it may be downloaded into processors or any suitable computers.

These and other aspects of the present invention will become apparent from and elucidated with reference to the embodiments described hereinafter.

Exemplary embodiments of the present invention will be described in the following, with reference to the following drawings.

### Brief description of the drawings

Fig. 1 shows an interactive information system according to an exemplary embodiment of the present invention.
Fig. 2 shows a flow-chart of a method according to an exemplary embodiment of the present invention.
Fig. 3 shows a display of financial data in a user interface device according to an exemplary embodiment of the present invention.
Figs. 4 to 21 show screenshots of a user interface display according to exemplary embodiments of the present invention.

### Detailed description of exemplary embodiments

The illustration in the drawings is schematically.

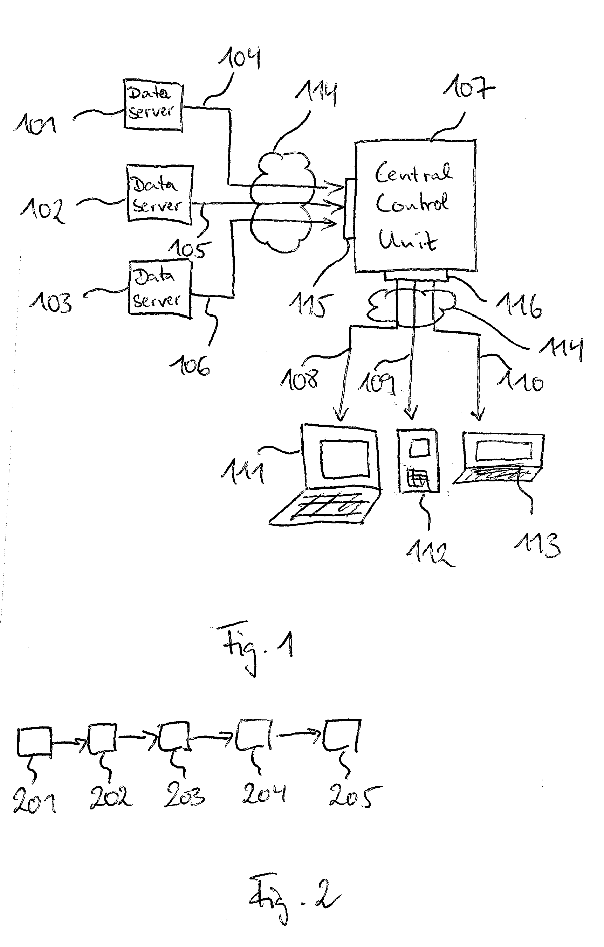

Fig. 1 shows an interactive information system according to an exemplary embodiment of the present invention. A plurality of external, individual data sources in form of data servers 101, 102, 103 are connected via communication links 104, 105, 106, respectively, to an interface 115 of a central control unit 107. The data connection between the data servers 101, 102, 103 and the central control unit 107 may be a wired connection or a wireless connection, for example via the internet 114.

The central control unit 107 has a second interface 116 which connects the central control unit 107 to several user interface devices via wired or wireless connections 108, 109, 110, respectively.

No use of the internet 114 is necessary, but the internet may be as well used if desired.

The user interface devices may be embodied in form of a mobile computer 111, a smart phone or other mobile phone 112 or, for example, a PDA 113.

The central control unit 107 is adapted for bundling real-time snapshots provided by the data servers 101, 102, 103 with a mobile watch list and an internet-based alert engine. Thus, an individual user can get low cost real-time pricing (snapshots) delivered on demand (via a pull) or based on pre-set thresholds with a push (alert).

The central control unit 107 may only send the pre-processed chart data to the mobile device 111, 112, 113 which then renders the data on the basis of additional data which is already stored on the mobile device. For example, the pre-processed data is transmitted via SMS.

Thus, the interactive information system is adapted for providing, via the central control unit and the mobile user interface device, the user with fully interactive mobile charts. The charts may contain any information, such as financial, personal or technical telemetry information.

Technical telemetry includes personal financial portfolios mapped to market prices in real time via real-time snapshot readings, various financial indicators such as momentum or moving averages or relative rankings of investable universe.

Technical Telemetry Information may also be accumulative historical data associated with a technical subject, e.g. the speed measurement of a race car during one lap around the race track or the revolutions per minute of an airplane engine during the flight.

The user has the facility of determining the exact value of the chart data point at the desired point in time in case of x-y charts where the x-axis contains the time and the y-axis contains the data point values.

The same approach can be used in any other chart type, as long as it can offer an additional information about the charts data by selecting a point of the chart.

The interactive information system accomplishes its functionality by receiving data pre-compiled by the central control unit, i.e. a server, for the specific chart type. In case of a line chart, the data consists of a series of data points where each data point is represented as the point value and point time stamp. In case of Open/High/Low/Close charts, each chart point consists of four values (OHLC) and a time stamp. Each data point is encoded in compact format to minimize the required data traffic. The mobile engine, i.e. the program of the mobile user interface, renders the chart on the mobile screen based on the array of received chart points.

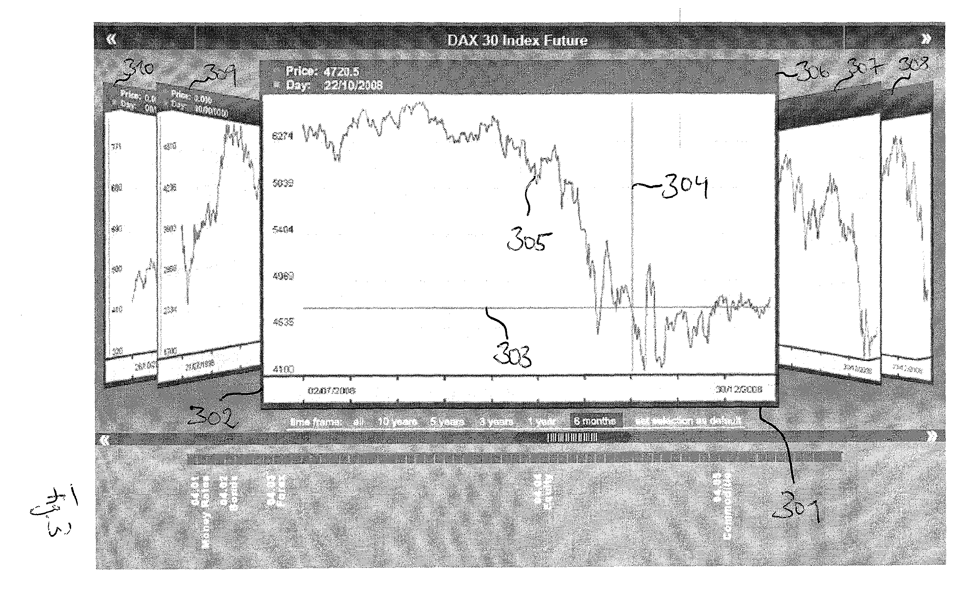

Finally, an interactive facility is provided by the engine to allow the user to select a specific point in the chart. A vertical bar movable by the user is an example of such facility (see for example Fig. 3). The interactive information system determines the current chart point by interpreting where the vertical bar intersects the line of the chart.

Further interactivity is enabled via user's ability to instruct control unit from mobile interface to perform a number of intelligent actions such as providing periodic updates of a chart, rendering a quasi-streaming experience, yet one where user is able to stipulate needed frequency.

Fig. 2 shows a flow-chart of a method according to an exemplary embodiment of the present invention. During a first step 201 the central control unit aggregates raw data from different individual data servers by entering into worldwide agreements with global exchanges and other type data providers such as foreign exchange brokers, banks and IMF, OECD etc. In other words, snapshot data is retrieved from different data servers.

In step 202 this real-time snapshot data or snapshot pricing is stored in a database on the central control unit.

Rather than either a) delayed data provisioning or b) real-time streaming data as is currently the two prevalent models offered in the market, the interactive information system implements a new data acquisition and processing on the basis of a communication link to the data providers whereby individual subscriber contracts are no longer necessary and users will receive real-time snapshot pricing. In this way, a worldwide exchange agreement matrix is provided, resulting in worldwide market data on a real-time snapshot basis.

In step 203 a range of analytic operations is applied to the raw data by the central control unit. These analytics represent methodologies for analyzing global financial markets. The application of these analytics represents an ordering of the (global) financial markets, enabling the user to quickly gauge which markets represent investment opportunities as well as enabling the user to form an informed view of capital markets across asset classes.

Then, in step 204, the user is offered the functionality of entering a user's portfolio independently of an instrument type (equity, bond, cash, futures, options, fund units) and to track this real-time via snapshots.

In step 205 a data selection pre-processed by the central control unit relating to the users selected portfolio is transmitted from the central control unit to the user interface device, i.e. a mobile phone. For example, the data is transmitted via SMS data packages.

On the mobile phone, a certain software module is installed which provides additional information for correctly unpacking, decoding and displaying the transmitted data.

The mobile application program modules include interactive charting enabling users to have the above information when roaming on any smart phone, including S60 (Symbian, Blackberry, iPhone, Windows or Android).

In such a way, a mobile financial information service may be provided which is cost-effective and provides real-time pricing data, actionable analytics, and personalized alerts to an easy to use interface, accessible on any smart phone or other mobile device.

Fig. 3 shows the display of user data on a user interface device according to an exemplary embodiment of the present invention. The user may select one of a plurality of individualized user data sets 306, 307, 308, 309, 310, for example by selecting one of them via the touch screen of his mobile device. Each of the individual user data sets 306 to 310 relates to a specific, user-preselected data group relates for example to particular financial market data. One example of such a user data set is the DAX 30 index future provided by the Eurex Exchange.

When the user selects such a particular user data set, real-time snapshot data may be requested from a particular external data server by sending the corresponding request message from the user interface device to the central control unit and from there to the particular data server.

A first data pre-processing is performed on the central control unit and the corresponding data is encoded and transmitted to the user interface device, for example by means of a SMS data package.

The user interface device comprises a program element or software module which is able to decode the received data and to further process the data such that it can be displayed on a screen.

Fig. 3 shows an example of such a displayed user data set. The x-axis 301 represents the time scale over a period of for example 6 months ranging from beginning of July 2008 until the end of December 2008. The y-axis 302 represents the corresponding DAX 30 index future value ranging from approximately 4100 points to approximately 6400 points.

The DAX 30 index future is represented by curve 305. Furthermore, the user may select a certain data point represented by horizontal line 303 and vertical line 304. The selected data point relates to October 22, 2008 and to a value of 4720.5.

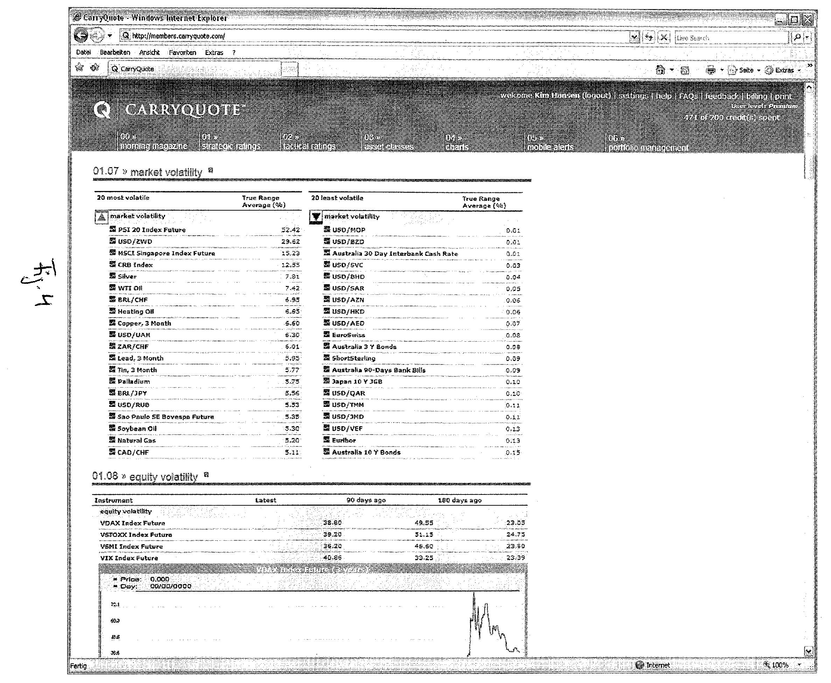

Figs. 4 to 21 show screenshots of a user interface display according to exemplary embodiments of the present invention.

Fig. 4 shows a listing of the 20 most volatile and the 20 least volatile market participants, such as for example the volatility of the price for copper, heating oil or the Euribor.

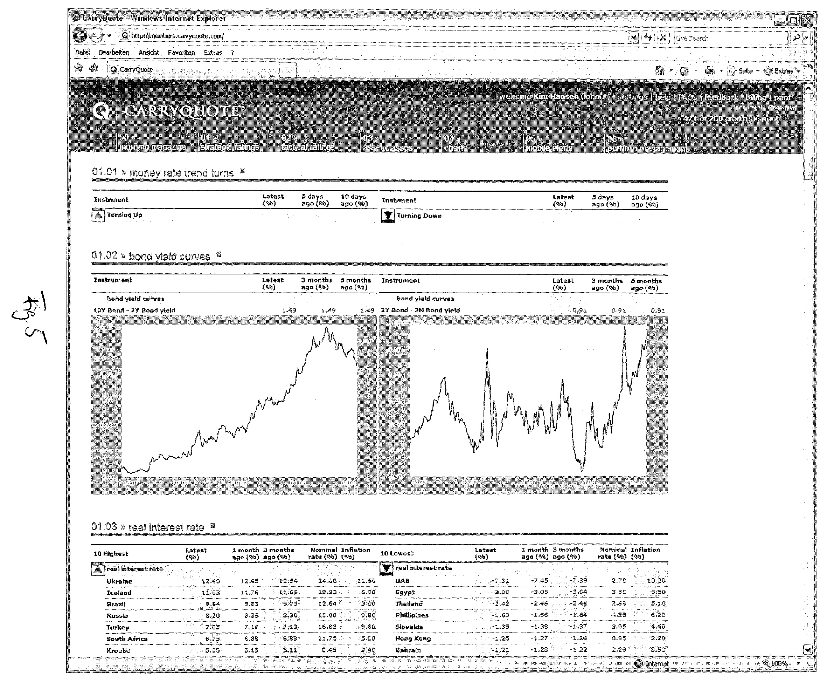

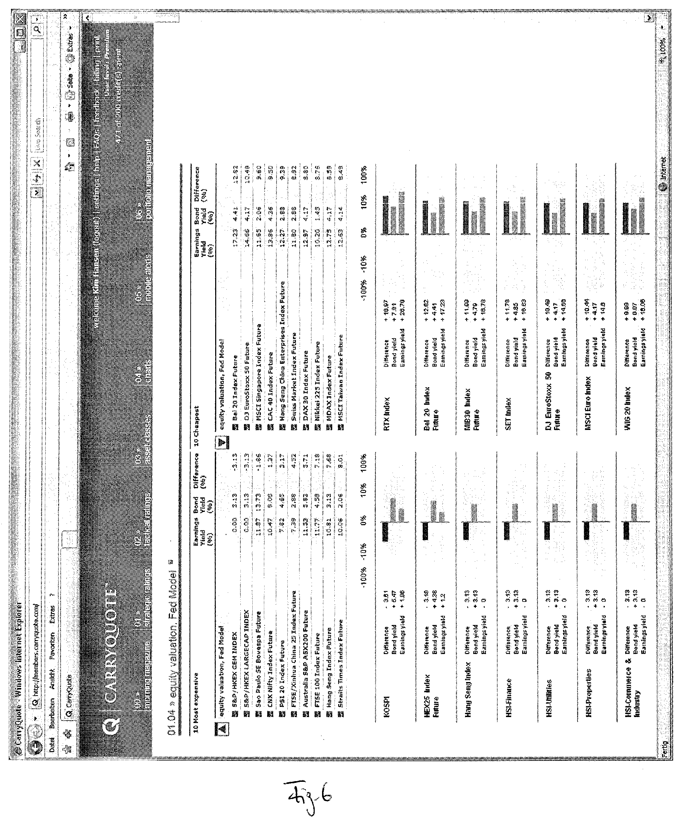

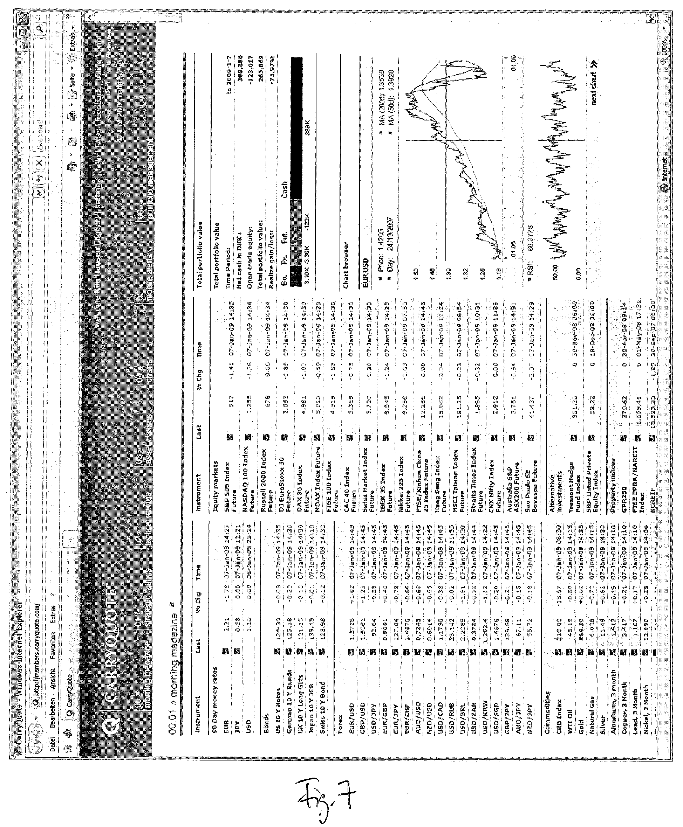

Fig. 5 shows bond yield curves, Fig. 6 shows an example of equity valuation, Fed Model, and Fig. 7 shows an example of a "morning magazine" depicting values of user selected market participants.

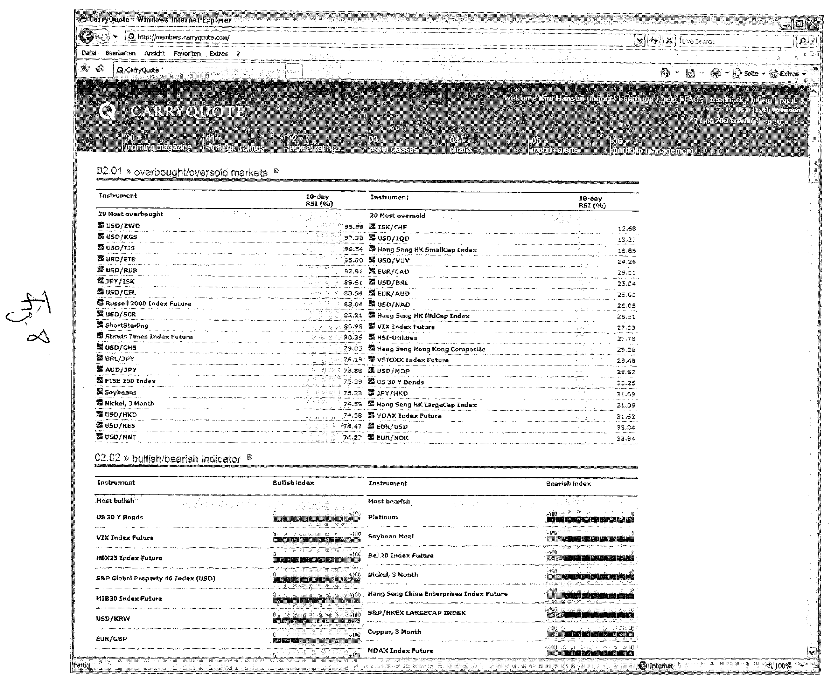

Fig. 8 shows a list of overbought/oversold markets and a list of the bullish/bearish indicator.

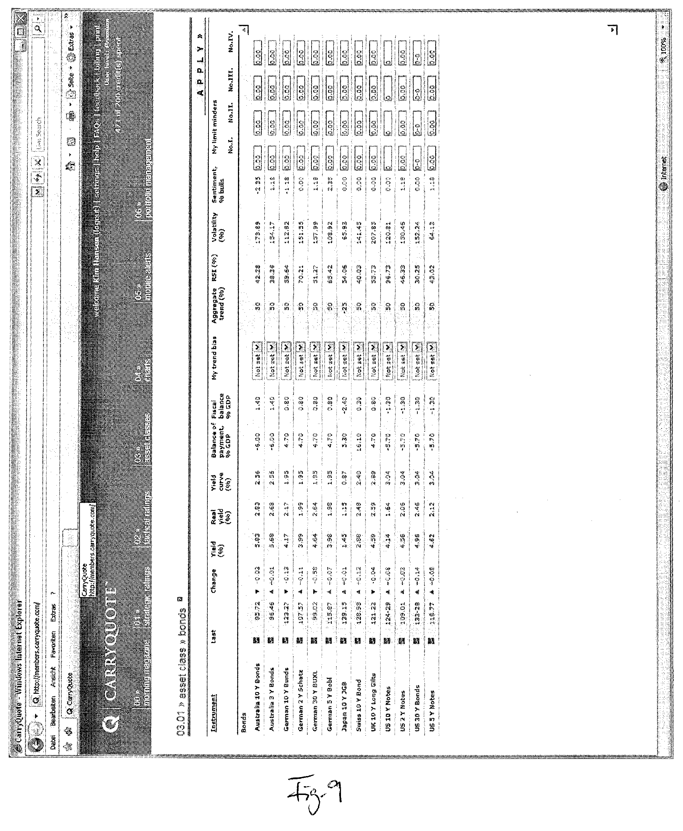

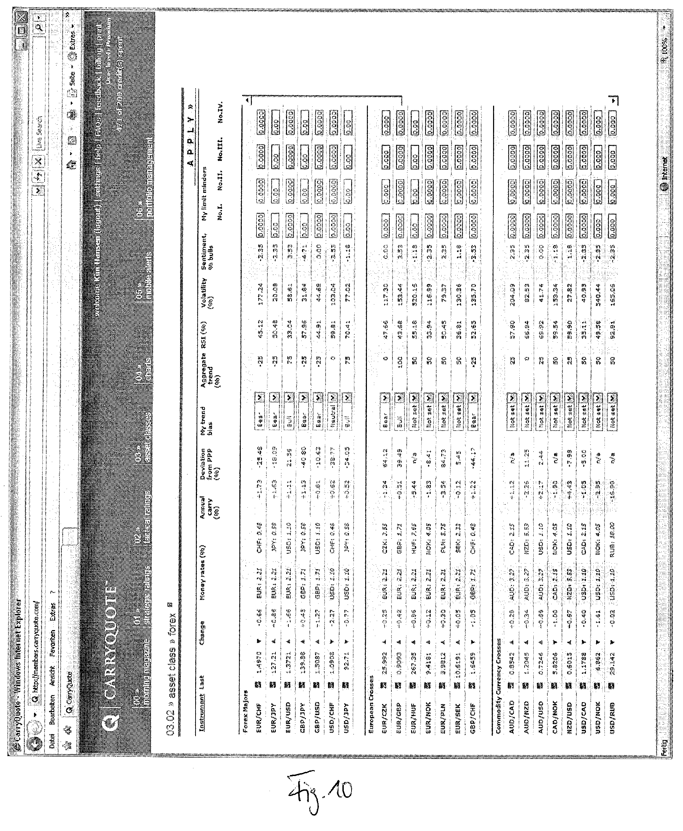

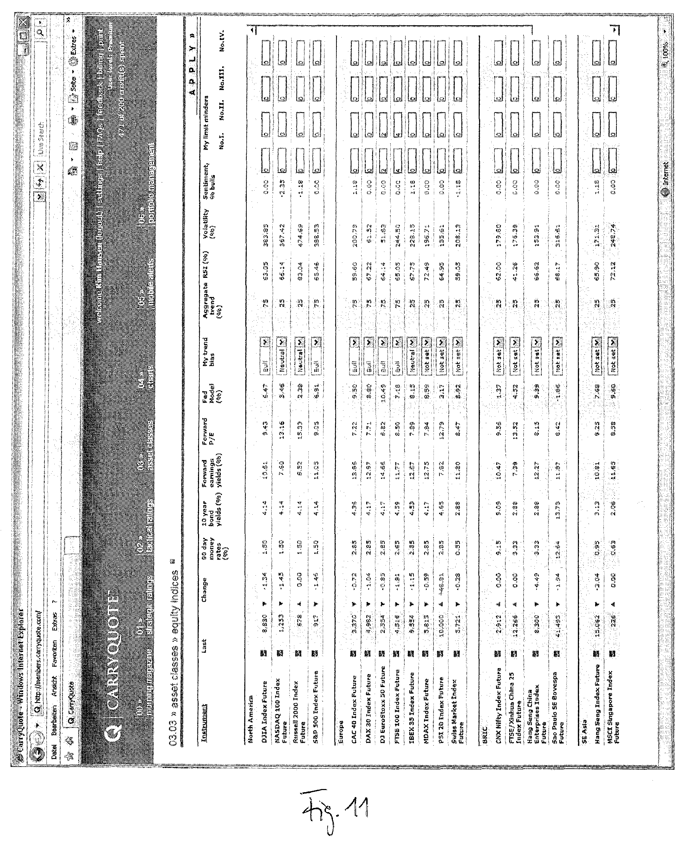

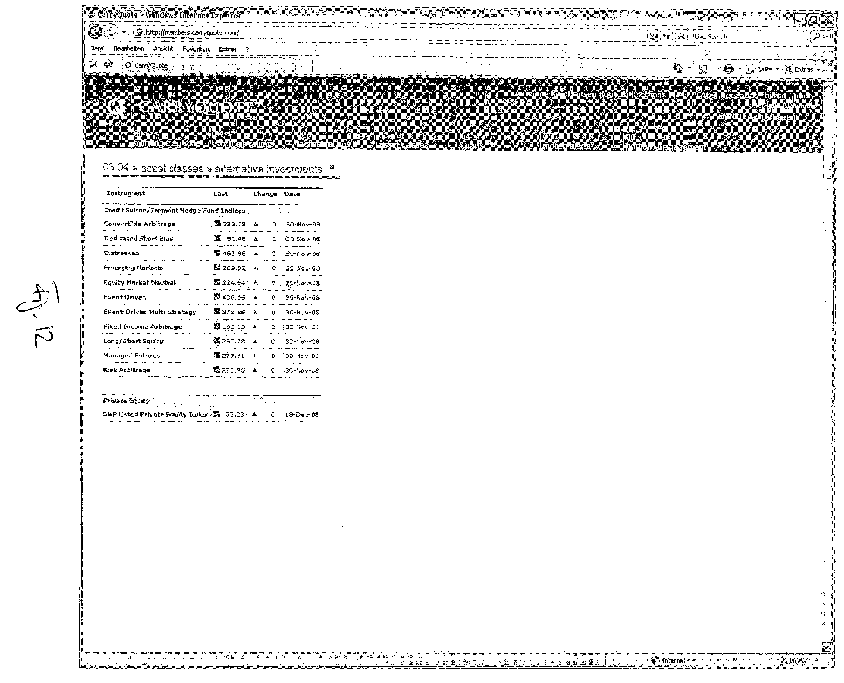

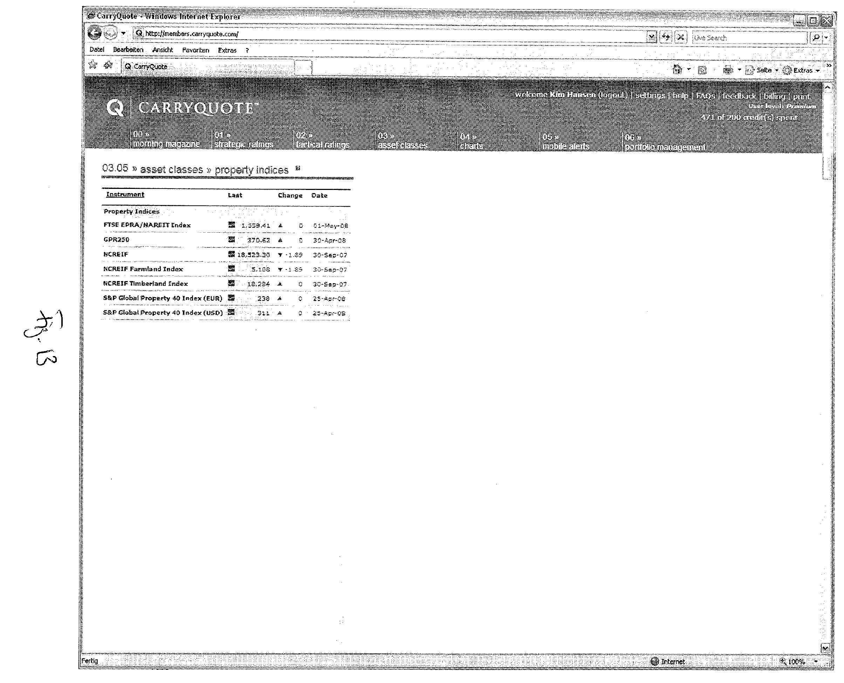

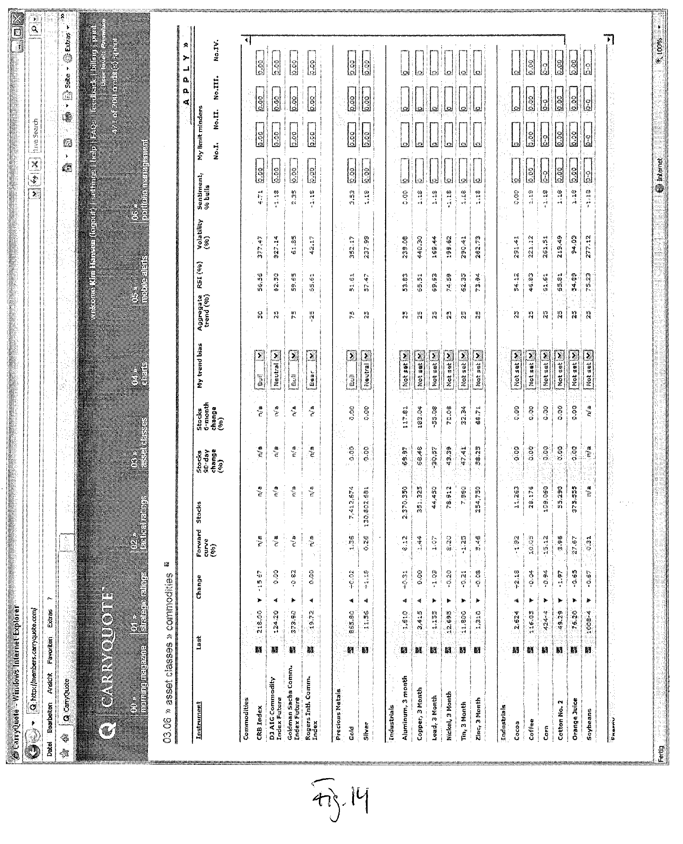

Fig. 9 shows a list of "asset class" bonds, Fig. 10 shows a list of "asset class" forex, Fig. 11 shows a list of "asset class" equity indices, Fig. 12 shows a list of "asset classes" alternative investments, Fig. 13 shows a list of "asset classes" property indices, Fig. 14 shows a list of "asset classes" commodities.

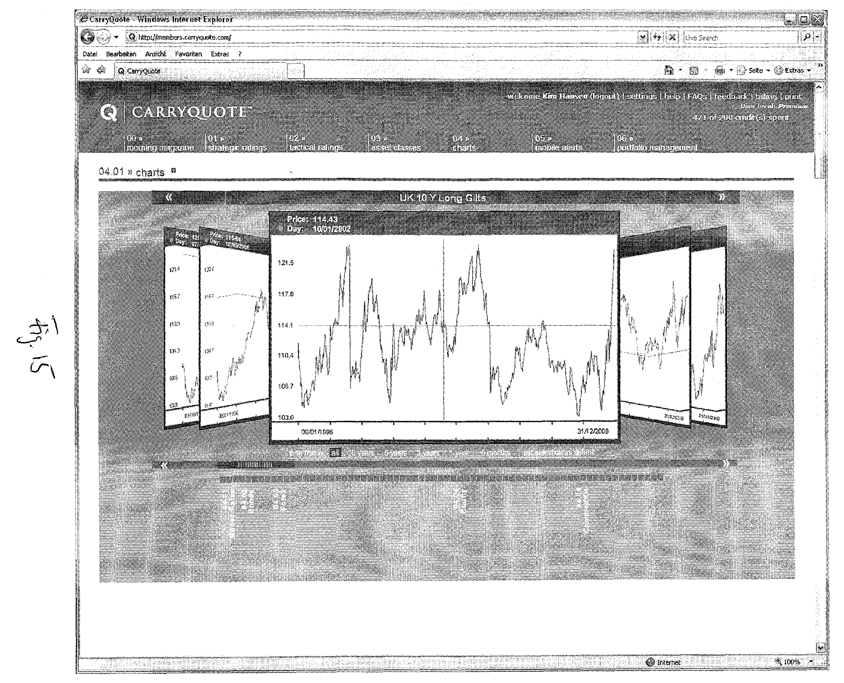

Fig. 15 shows a typical chart, depicted and interactively analysable in the same manner as the chart of Fig. 3.

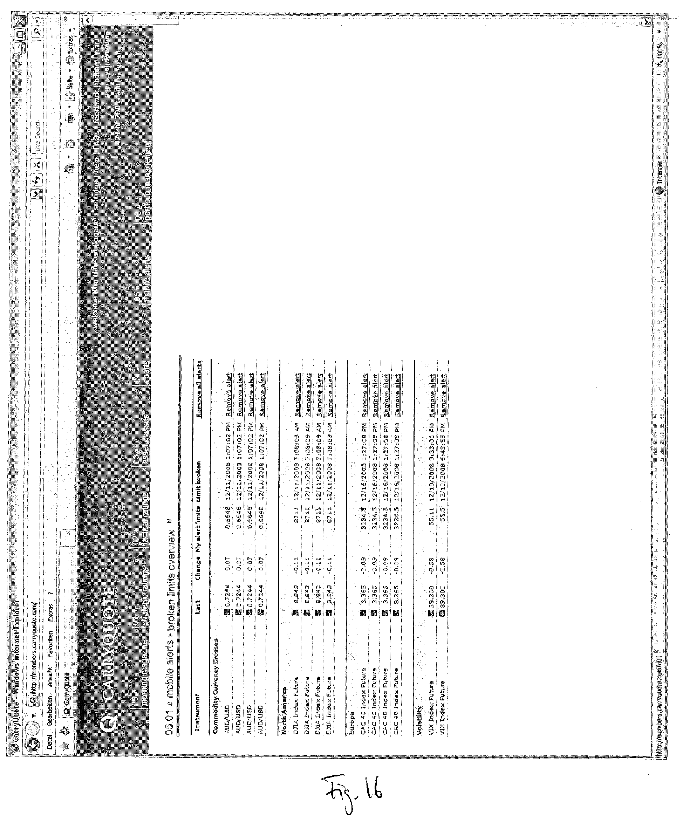

Fig. 16 shows a "mobile alerts" broken limits overview.

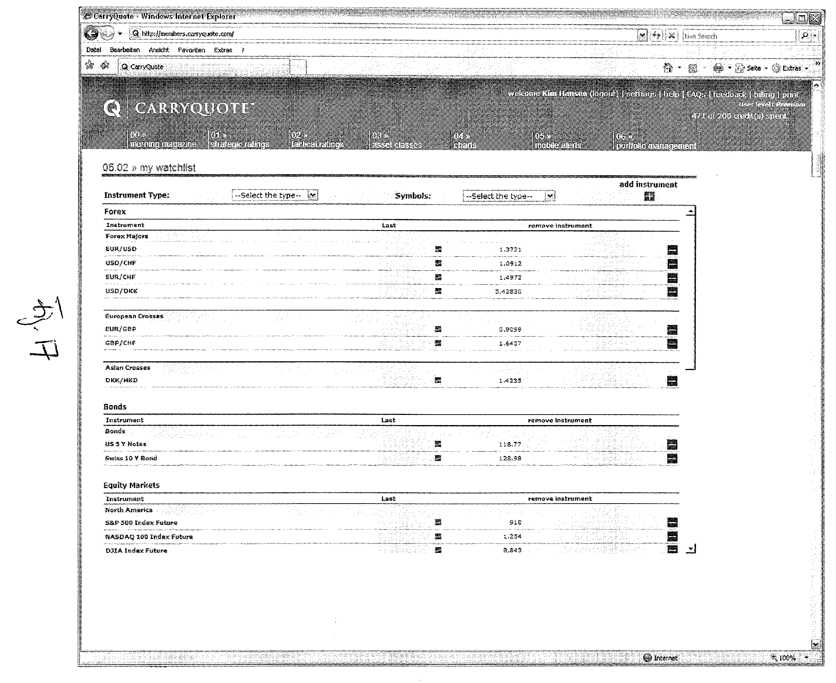

Fig. 17 shows a user defined watchlist.

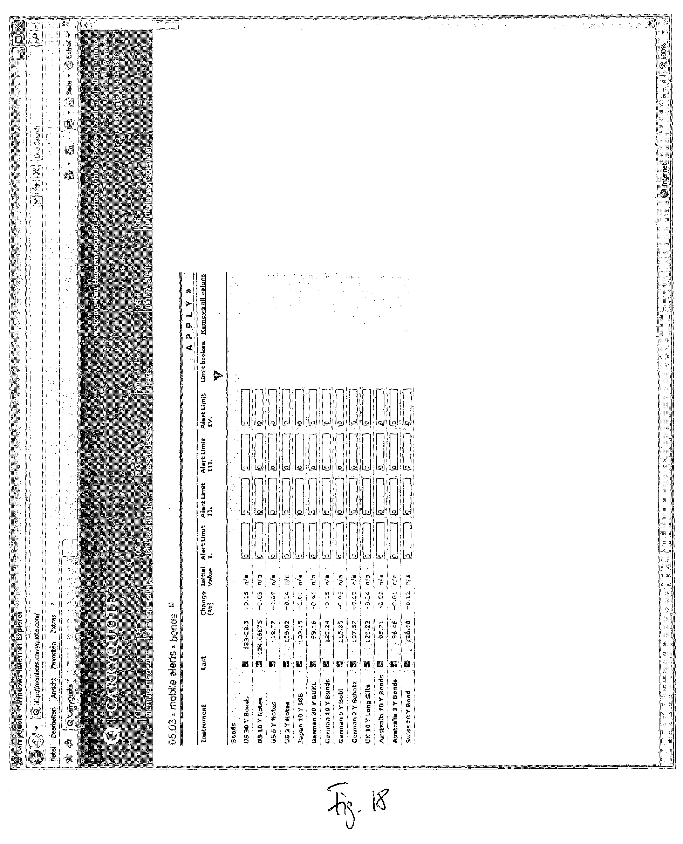

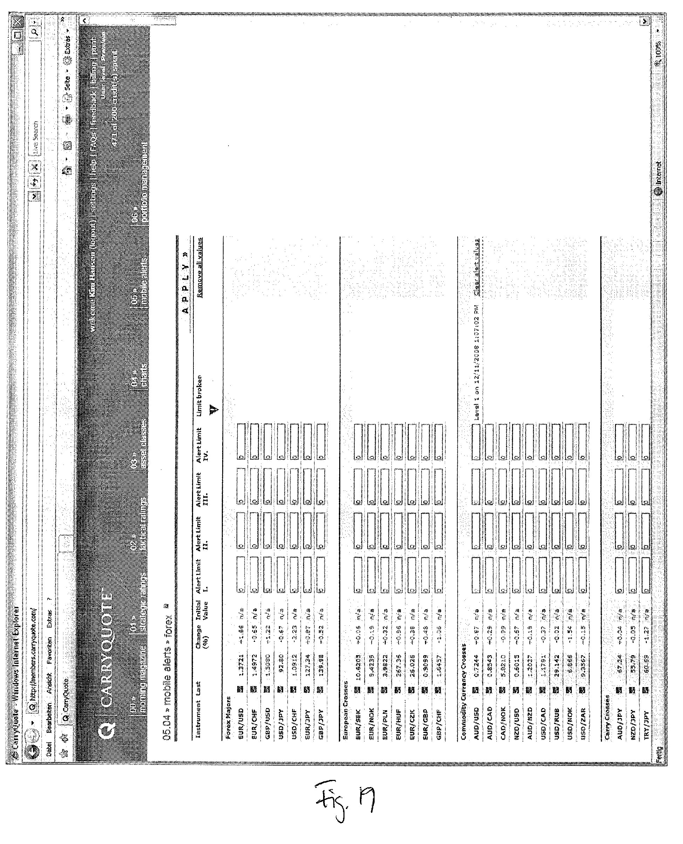

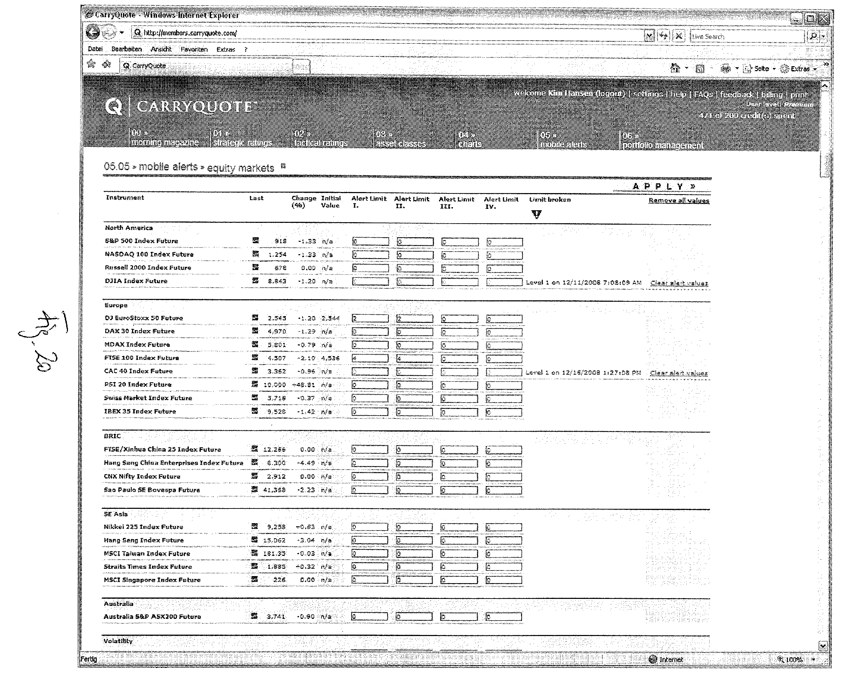

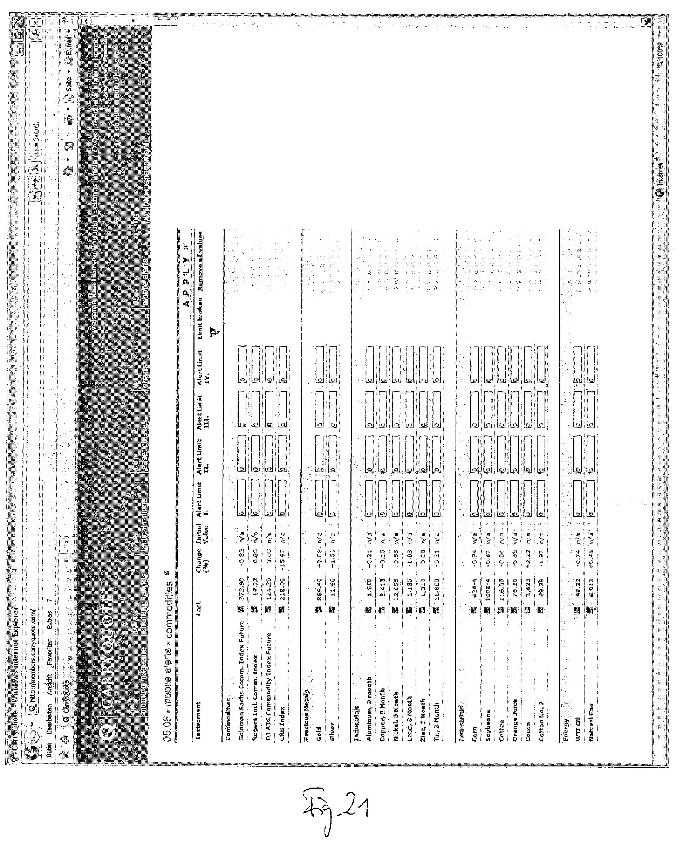

Fig. 18 shows a list of "mobile alerts" bonds, Fig. 19 shows a list of "mobile alerts" forex, Fig. 20 shows a list of "mobils alerts" equity markets and Fig. 21 shows a list of "mobile alerts" commodities.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. Interactive information system for providing user data from raw data acquired from a plurality of individual data sources to a user, the interactive information system comprising:
a first interface (104, 115) for receiving the raw data from at least one individual data source (101);
a control unit (107);
a user interface device (111) for selecting, by a user, a particular data set from the raw data;
wherein the control unit (107) is adapted for pre-processing the selected particular data set, resulting in user data;
wherein the user interface device (111) is further adapted for interactively displaying the user data to the user;
wherein the raw data is static real-time snapshot data.

2. Interactive information system of claim 1,
wherein the user interface device (111) is further adapted for selecting, by a user, a data point from the user data and for determining a data point value of the data point.

3. Interactive information system of claim 2,
wherein the data point value is a real time value.

4. Interactive information system of one of claims 2 or 3,
wherein the data point relates to a data point value and a time stamp.

5. Interactive information system of one of claims 2 or 3,
wherein the data point relates to four data point values (OHLC) and a time stamp.

6. Interactive information system of one of the preceding claims,
wherein the control unit (107) is adapted for encoding the data point before transmitting the data point to the user interface device (111).

7. Interactive information system of one of the preceding claims,
wherein the user interface device (111) is adapted for rendering a display of the user data based on an array of received data points.

8. Interactive information system of one of the preceding claims,
wherein the control unit (107) is adapted for transmitting the user data as an array of data points to the user interface device (111) via a data packet of a fixed maximum size.

9. Interactive information system of one of the preceding claims,
wherein the user data is static real-time data.

10. Interactive information system of one of the preceding claims,
wherein the control unit (107) is adapted for pre-processing the received raw data upon a user request from the user interface device (111).

11. Interactive information system of one of the preceding claims,
wherein the user interface device (111) is part of a mobile device.

12. Interactive information system of one of the preceding claims,
wherein the at least one individual data source (101) is one of a global exchange provider, a foreign exchange broker, or a bank.

13. Interactive information system of one of the preceding claims,
wherein the receipt of the raw data from the at least one individual data source (101) is triggered by the control unit (107).

14. Interactive information system of one of the preceding claims,
wherein the receipt of the raw data from the at least one individual data source (101) is triggered by the user interface device (111).

15. Interactive information system of one of the preceding claims,
wherein the control unit (107) is further adapted for automatically alerting the user if the user data or the raw data meet a preselected threshold criteria.

16. Interactive information system of one of the preceding claims,
wherein the user data displayed on the user interface device (111) comprises data comprising information about an activity of a market.

17. A user interface device (111) of an interactive information system of one of claims 1 to 16.

18. A control unit (107) of an interactive information system of one of claims 1 to 16.

19. Method of interactively providing user data from raw data acquired from a plurality of individual data sources to a user, the method comprising the steps of:
receiving, in a control unit (107), raw data from at least one individual data source (101);
selecting, by a user, a particular data set from the raw data by means of a user interface device (111);
pre-processing the selected particular data set, resulting in user data;
interactively displaying the user data to the user by means of the user interface device (111);
wherein the raw data is static snapshot data.

20. Program element of interactively providing user data from raw data acquired from a plurality of individual data sources to a user, which, when being executed by a processor, is adapted to carry out the steps of:
receiving, in a control unit (107), raw data from at least one individual data source (101);
selecting a particular data set from the raw data by means of a user interface device (111);
pre-processing the selected particular data set, resulting in user data;
interactively displaying the user data to the user by means of the user interface device (111);
wherein the raw data is static real-time snapshot data.

21. Computer-readable medium, in which a computer program of interactively providing user data from raw data acquired from a plurality of individual data sources to a user is stored which, when being executed by a processor, is adapted to carry out the steps of:
receiving, in a control unit (107), raw data from at least one individual data source (101);
selecting a particular data set from the raw data by means of a user interface device (111);
pre-processing the selected particular data set, resulting in user data;
interactively displaying the user data to the user by means of the user interface device (111);
wherein the raw data is static real-time snapshot data.

## Amended claims

### Amended claims in accordance with Rule 137(2) EPC.

**1.** Interactive information system for providing user data from raw data acquired from a plurality of individual data sources to a user, the interactive information system comprising:
a first interface (104, 115) for receiving the raw data from at least one individual data source (101);
a control unit (107);
a user interface device (111) for selecting, by a user, a particular data set from the raw data;
wherein the control unit (107) is adapted for pre-processing the selected particular data set, resulting in user data;
wherein the user interface device (111) is further adapted for interactively displaying the user data to the user;
wherein the raw data is static real-time snapshot data;
wherein the user interface device (111) is further adapted for selecting, by a user, a data point from the user data and for determining a data point value of the data point;
wherein the data point value is a real time value.

**2.** Interactive information system of claim 1,
wherein the data point relates to a data point value and a time stamp.

**3.** Interactive information system of one of claims 1 or 2,
wherein the data point relates to four data point values (OHLC) and a time stamp.

**4.** Interactive information system of one of the preceding claims,
wherein the control unit (107) is adapted for encoding the data point before transmitting the data point to the user interface device (111).

**5.** Interactive information system of one of the preceding claims,
wherein the user interface device (111) is adapted for rendering a display of the user data based on an array of received data points.

**6.** Interactive information system of one of the preceding claims,
wherein the control unit (107) is adapted for transmitting the user data as an array of data points to the user interface device (111) via a data packet of a fixed maximum size.

**7.** Interactive information system of one of the preceding claims,
wherein the user data is static real-time data.

**8.** Interactive information system of one of the preceding claims,
wherein the control unit (107) is adapted for pre-processing the received raw data upon a user request from the user interface device (111).

**9.** Interactive information system of one of the preceding claims,
wherein the user interface device (111) is part of a mobile device.

**10.** Interactive information system of one of the preceding claims,
wherein the at least one individual data source (101) is one of a global exchange provider, a foreign exchange broker, or a bank.

**11.** Interactive information system of one of the preceding claims,
wherein the receipt of the raw data from the at least one individual data source (101) is triggered by the control unit (107).

**12.** Interactive information system of one of the preceding claims,
wherein the receipt of the raw data from the at least one individual data source (101) is triggered by the user interface device (111).

**13.** Interactive information system of one of the preceding claims,
wherein the control unit (107) is further adapted for automatically alerting the user if the user data or the raw data meet a preselected threshold criteria.

**14.** Interactive information system of one of the preceding claims,
wherein the user data displayed on the user interface device (111) comprises data comprising information about an activity of a market.

**15.** A user interface device (111) of an interactive information system of one of claims 1 to 14.

**16.** A control unit (107) of an interactive information system of one of claims 1 to 14.

**17.** Method of interactively providing user data from raw data acquired from a plurality of individual data sources to a user, the method comprising the steps of:
receiving, in a control unit (107), raw data from at least one individual data source (101);
selecting, by a user, a particular data set from the raw data by means of a user interface device (111);
pre-processing the selected particular data set, resulting in user data;
interactively displaying the user data to the user by means of the user interface device (111);
selecting, by the user, a data point from the user data;
determining a data point value of the data point;
wherein the raw data is static snapshot data;
wherein the data point value is a real time value.

**18.** Program element of interactively providing user data from raw data acquired from a plurality of individual data sources to a user, which, when being executed by a processor, is adapted to carry out the steps of:
receiving, in a control unit (107), raw data from at least one individual data source (101);
selecting a particular data set from the raw data by means of a user interface device (111);
pre-processing the selected particular data set, resulting in user data;
interactively displaying the user data to the user by means of the user interface device (111);
selecting, by the user, a data point from the user data;
determining a data point value of the data point;
wherein the raw data is static real-time snapshot data;
wherein the data point value is a real time value.

**19.** Computer-readable medium, in which a computer program of interactively providing user data from raw data acquired from a plurality of individual data sources to a user is stored which, when being executed by a processor, is adapted to carry out the steps of:
receiving, in a control unit (107), raw data from at least one individual data source (101);
selecting a particular data set from the raw data by means of a user interface device (111);
pre-processing the selected particular data set, resulting in user data;
interactively displaying the user data to the user by means of the user interface device (111);
selecting, by the user, a data point from the user data;
determining a data point value of the data point;
wherein the raw data is static real-time snapshot data;
wherein the data point value is a real time value.
